# EUROPEAN PATENT APPLICATION

(11) **EP 2 930 642 A1**
(43) Date of publication of application: **14.10.2015**
(21) Application number: 15162568.8
(22) Date of filing: 07.04.2015
(51) Int. Cl.: G06F 21/34, H04W 12/06, G06F 21/83

(54) **METHOD AND PASSWORD VERIFYING DEVICE FOR VERIFYING AN INPUT PASSWORD, AND COMPUTER SYSTEM INCLUDING THE PASSWORD VERIFYING DEVICE**

(30) Priority: 09.04.2014 TW 103113026
(71) Applicant: Chou, Hung-Chien, Taichung City 408 (TW)
(72) Inventor: Chou, Hung-Chien, Taichung City 408 (TW)
(74) Representative: Delumeau, François Guy

(57) **Abstract**

In a method for verifying an input password, a password verifying device coupled between a electronic device and an input device is configured to: in response to a password input request (601) from the electronic device, generating image data associated with a virtual keyboard and transmitting the image data to the electronic device; in response to password data from the electronic device, composing (604) an input password according to the password data; and in response to a password confirm request from the input device (4), comparing (606) the input password and a preset password stored therein.

## Description

The disclosure relates to a method and a password verifying device for verifying an input password, and a computer system that includes the password verifying device for implementing the method.

Taiwanese Patent Publication No. 200905541 discloses a key inputting method using dynamic simulated keyboard. The method provides a simulated keyboard that is configured to dynamically change positions of the keys thereof. Using this method may avoid the inputted content, such as a password, being stolen via "key logging".

However, the operating system of a computer device may be hijacked by a third party, allowing the third party to record the activities of the input components of the computer device (mouse, keyboard, etc.) and to capture a screenshot from a display unit connected to the computer device. Therefore, the security of the inputted content is still at risk.

Therefore, an object of the disclosure is to provide a method that can alleviate at least one of the drawbacks of the prior art.

According to the disclosure, the method for verifying an input password is to be implemented by a password verifying device. The password verifying device is electrically connected between an input device and an electronic device. The electronic device includes a computing module executing an operating system (OS) that is installed with a control application program, and a display module electrically connected to the computing module. The password verifying device is an independent, stand-alone device and stores a preset password. The method includes the steps of:
in response to a password input request from the control application program, generating image data associated with a virtual keyboard and transmitting the image data to the computing module so that the computing module controls the display module to display the virtual keyboard thereon;
in response to password data associated with an operation of the virtual keyboard from the control application program, composing an input password according to the password data; and
in response to a password confirm request from the input device, comparing the input password and the preset password.

Another object of the disclosure is to provide a password verifying device that is configured to implement the abovementioned method.

According to the disclosure, the password verifying device is an independent, stand-alone device and electrically connected between an input device and an electronic device. The password verifying device includes a virtual key generating unit, a storage unit, a processing unit and a comparing unit.

In response to a password input request from the electronic device, the virtual key generating unit is configured to generate image data associated with a virtual keyboard and to transmit the image data to the electronic device. The storage unit stores a preset password therein.

In response to password data associated with an operation of the virtual keyboard from the electronic device, the processing unit is configured to compose an input password according to the password data.

In response to a password confirm request from the input device, the comparing unit is configured to compare the input password and the preset password.

Another object of the disclosure is to provide a computer system that incorporates the password verifying device.

According to the disclosure, the computer system includes an electronic device, an input device and the password verifying device.

The electronic device includes a computing module executing an operating system (OS) that is installed with a control application program, and a display module electrically connected to the computing module. The password verifying device is an independent, stand-alone device, stores a preset password therein, and is electrically connected between the input device and the electronic device.

In response to a password input request from the control application program, the password verifying device is configured to generate image data associated with a virtual keyboard, and to transmit the image data to the computing module so that the computing module controls the display module to display the virtual keyboard thereon.

In response to an operation of the virtual keyboard, the computing module is configured to generate password data and to transmit the password data to the password verifying device, and the password verifying device is configured to compose an input password according to the password data.

In response to a password confirm request from the input device, the password verifying device is configured to compare the input password and the preset password.

Other features and advantages of the disclosure will become apparent in the following detailed description of the embodiment with reference to the accompanying drawings, of which:
Figure 1 is a block diagram illustrating an embodiment of a computer system according to the disclosure;
Figure 2 is a flow chart illustrating a method to be implemented by a password verifying device of the computer system;
Figure 3 is a flow chart illustrating interactions between the password verifying device and a control application program for obtaining password data;
Figure 4 is a flow chart illustrating interactions between the password verifying device and the control application program for verifying a password confirm request; and
Figures 5 and 6 respectively illustrate examples of a virtual keyboard.

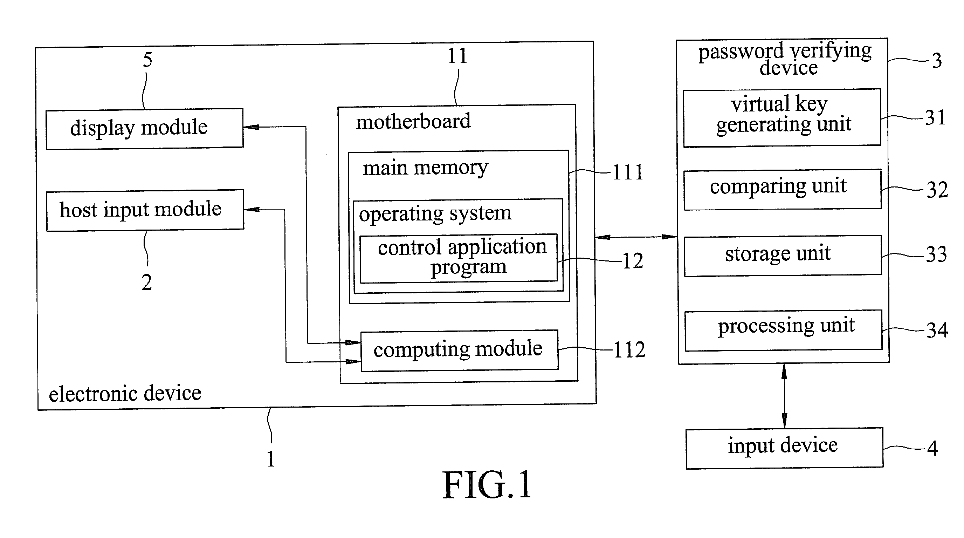

Figure 1 illustrates a computer system according to the embodiment of the disclosure. The computer system includes an electronic device 1, a password verifying device 3 and an input device 4.

The electronic device 1 may be embodied using a personal computer, a laptop computer, a tablet computer, etc. The electronic device 1 includes a main memory 111, a computing module 112, a host input module 2 and a display module 5.

The main memory 111 and the computing module 112 may be components integrated on a motherboard 11.

The main memory 111 stores an operating system (OS) that is installed with a control application program 12. The computing module 112 may be embodied using a central processing unit (CPU), and is configured to execute the OS. The host input module 2 may be embodied using a mouse, a keyboard, a touchscreen, a touchpad or a combination thereof. The host input module 2 and the display module 5 are electrically connected to the computing module 112, and are controlled by the OS.

The password verifying device 3 is an independent stand-alone device, and may be embodied using a chip controlled by firmware. The password verifying device 3 includes a virtual key generating unit 31, a comparing unit 32, a storage unit 33 and a processing unit 34.

The input device 4 is coupled to the password verifying device 3. That is to say, the password verifying device 3 is electrically connected between the input device 4 and the electronic device 1. The input device 4 may be embodied using, for example, a keyboard, a mouse, a switch, a touchpad or a combination thereof. The connection between the password verifying device 3 and the input device 4 may be a wired connection or a wireless connection (e.g., using near field communication (NFC), Wi-Fi, Bluetooth (BT), infrared radiation (IR), etc.).

In operation, when it is required to verify a password (for example, when a user attempts to access certain protected content stored in the main memory 111, or execute certain password-protected feature of the OS through the host input module 2 and/or the input device 4), the control application program 12 generates a password input request and transmits the password input request to the password verifying device 3.

In response, the virtual key generating unit 31 of the password verifying device 3 generates image data associated with a virtual keyboard. The virtual key generating unit 31 then transmits the image data to the electronic device 1.

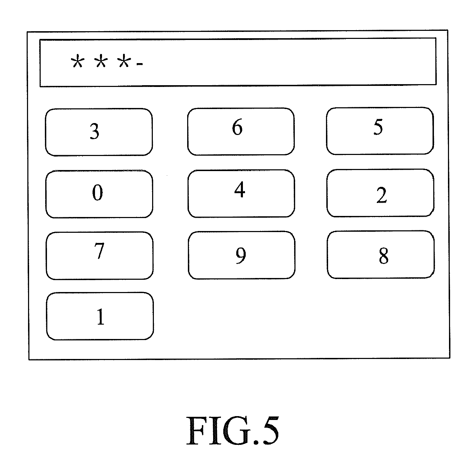

The computing module 112 uses the image data to control the display module 5 to display the virtual keyboard thereon (one example is shown in Figure 5), and instructs the user to provide an input password using one of the host input module 2 and the input device 4. In this embodiment, the input password includes a sequence of numbers.

In one example, the input device 4 may not include the full functionality of the host input module 2 (for example, the input device 4 may be a simple switch that is only configured to transmit a binary signal), and the input password is inputted using the host input module 2.

Each time a number is inputted using the host input module 2 (by way of an operation on the virtual keyboard, such as a mouse clicking on a click location of the virtual keyboard that corresponds with a specific number, or a touchscreen that allows a user to directly "touch" the specific number), the computing module 112 obtains a set of coordinates for the click location, and sends the set of coordinates to the password verifying device 3. In the meantime, the computing module 112 controls the display module 5 to display a random character on an input progress field of the virtual keyboard, indicating that a number has been inputted. In an example shown in Figure 5, the character (*) may be used.

Using the set of coordinates, the processing unit 34 of the password verifying device 3 is capable of determining an alphanumeric character that is displayed on the virtual keyboard and that corresponds to the click location. The alphanumeric character is then stored by the processing unit 34 for composing the input password by arranging the alphanumeric characters in an order of the sequence of the click locations afterward.

After the entire input password has been provided, the user is required to provide a password confirm request using the input device 4. In this example, the password confirm request is in the form of the binary signal.

In response to the password confirm request from the input device 4, the processing unit 34 compares the input password and a preset password previously stored in the storage unit 33.

In this example, upon receiving operation data from the input device 4, the processing unit 34 generates and stores a click event in the storage unit 33 (as a token to prove that the source of operation data is the input device 4). The processing unit 34 compares the input password and the preset password only when the click event is stored in the storage unit 33. After the processing unit 34 compares the input password and the preset password, the click event is deleted (such that subsequent attempts for accessing, e.g., the password-protected features, still require this confirmation procedure involving the password confirm request from the input device 4).

It is noted that, the OS executed by the computing module 112 may be attacked by hacks, and therefore, data transmission (including the password that is inputted using the host input module 2) through the OS may be obtained by a third party that has unauthorized access to the OS using, for example, a remotely controlled host.

As a result, in this embodiment, the password verifying device 3 is configured such that only when a password confirm request is received directly from the input device 4, which is a stand-alone device and is not controlled by the OS, the password confirm request is deemed valid and subsequent actions are taken. That is to say, when a third party attempts to access the password-protected feature and sends the password confirm request using a device other than the input device 4, the password verifying device 3 will not proceed to compare the input password and the preset password.

In this manner, even if the preset password somehow becomes known to the third party, access to the password-protected features is still blocked without the use of the input device 4.

When it is determined that the input password conforms with the preset password, the password verifying device 3 verifies that the input password is correct (and may accordingly enable certain password-protected features to be accessed) . Otherwise, when it is determined that the input password does not conform with the preset password, the password verifying device 3 determines that the input password is incorrect, and all password-protected features are accordingly kept protected.

In another example of this embodiment, the input device 4 includes the functionalities of the host input module 2. That is, the input password may be inputted using the input device 4, and the host input module 2 is not used for the purpose of inputting the input password. In such case, the determining of the input password is done in the following manner.

Upon receiving operation data, which is associated with operation of the input device 4 on the virtual keyboard, from the input device 4, the processing unit 34 generates and stores a click event in the storage unit 33.

Afterward, the operation data is forwarded to the control application program 12, so that the control application program 12 is operable to obtain a plurality of sets of coordinates respectively for the click locations on the virtual keyboard, according to the operation data. The control application program 12 then sends the sets of coordinates to the password verifying device 3 as the password data.

The password verifying device 3 determines the alphanumeric characters that are displayed on the virtual keyboard respectively at the click locations according to the sets of coordinates only when the click event is stored in the storage unit 33. Afterward, the click event is deleted.

The sets of coordinates may be encoded into the password data before being transmitted to the password verifying device 3, and accordingly the password verifying device 3 decodes the password data to fetch the sets of coordinates before determining the alphanumeric characters therefrom.

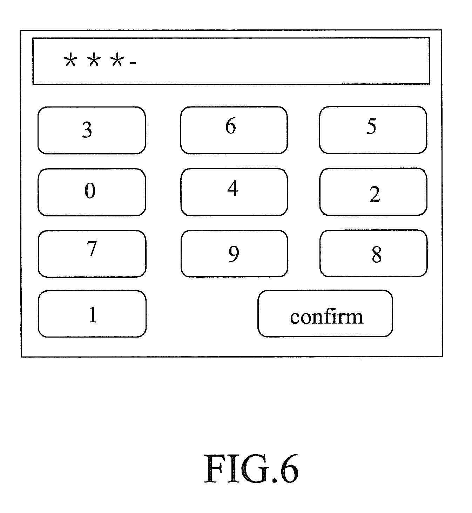

In this example, the virtual keyboard displayed on the input device 4 includes a confirm button (see Figure 6), and the password confirm request is in the form of a click location on the virtual keyboard (that is, the user is required to operate the input device 4 to "click" on the confirm button in order to input the password confirm request).

Similar to the operations regarding receiving the input password, upon receiving operation data, which is associated with operation of the input device 4 on the virtual keyboard, from the input device 4, the processing unit 34 generates and stores a click event in the storage unit 33.

The operation data is then forwarded to the control application program 12 so that the control application program 12 is operable to obtain a set of coordinates for the click location on the virtual keyboard according to the operation data, and to send the set of coordinates to the password verifying device 3.

The password verifying device 3 is configured to verify that the password confirm request is authentic only when the click location according to the set of coordinates corresponds with the confirm button, and when the click event is stored in the storage unit 33. With an authentic password confirm request, the password verifying device 3 compares the input password and the preset password, after which the click event is deleted.

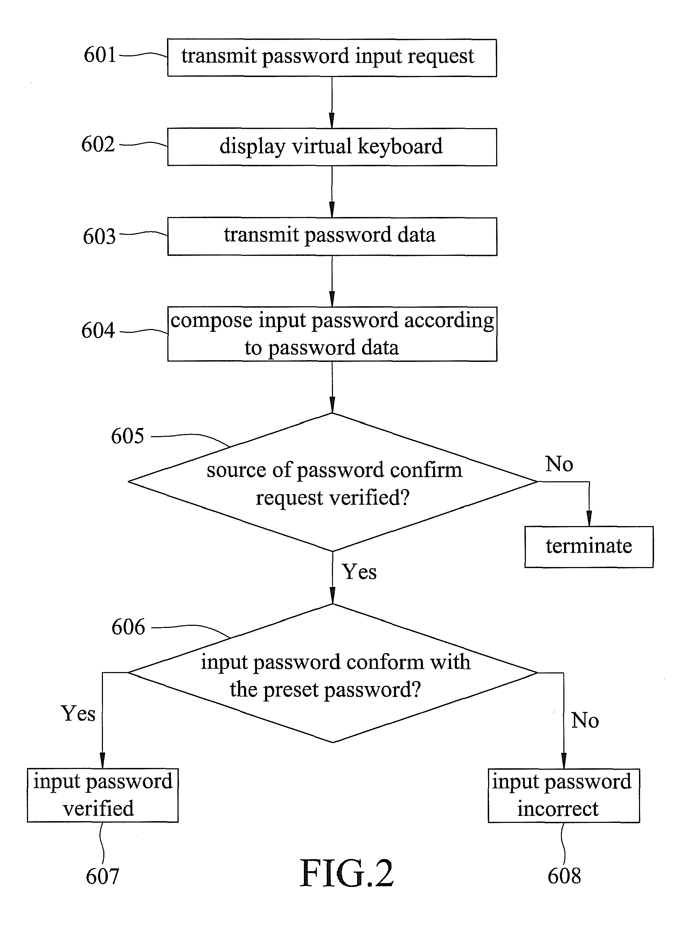

The operations done by the computer system may be expressed as a method for verifying an input password. Steps of the method are illustrated in Figure 2 accompanying the following description.

In step 601, the control application program 12 executed by the computing module 112 transmits a password input request to the password verifying device 3.

In step 602, the password verifying device 3 generates the image data associated with the virtual keyboard and transmits the image data to the computing module 112, so that the computing module 112 controls the display module 5 to display the virtual keyboard thereon.

In step 603, the input password is received. In response, the computing module 112 transmits the password data associated with an operation of the virtual keyboard to the password verifying device 3. Specifically, the password data includes a sequence of click locations on the virtual keyboard.

In step 604, the password verifying device 3 composes the input password according to the password data. Specifically, for each of the click locations, the password verifying device 3 determines an alphanumeric character that is displayed on the virtual keyboard and that corresponds to the click location. Afterward, the password verifying device 3 composes the input password by arranging the alphanumeric characters in an order of the sequence of the click locations.

In step 605, the password verifying device 3 verifies the source of the password confirm request. When it is verified that the password confirm request is sent from the input device 4, the flow proceeds to step 606. Otherwise, the flow is terminated.

In step 606, the password verifying device 3 compares the input password and the preset password.

When it is determined in step 606 that the input password conforms with the preset password, the password verifying device 3 verifies that the input password is correct (step 607). When it is determined in step 606that the input password does not conform with the preset password, the password verifying device 3 determines that the input password is incorrect (step 608).

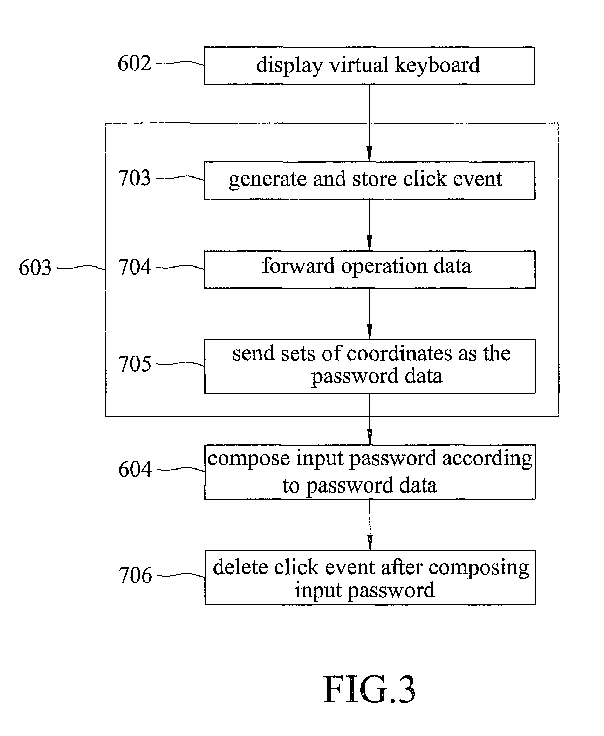

Referring to Figure 3, in the example where the input device 4 is used to provide the input password, operations involved in step 603 are carried out in the following manner.

In sub-step 703, the password verifying device 3 generates and stores a click event therein.

In sub-step 704, the password verifying device 3 forwards the operation data to the control application program 12.

In sub-step 705, the control application program 12 obtains a plurality of sets of coordinates respectively for the click locations on the virtual keyboard according to the operation data, and sends the sets of coordinates to the password verifying device 3 as the password data. The sets of coordinates may be encoded into the password data before being transmitted to the password verifying device 3, and accordingly the password verifying device 3 decodes the password data to fetch the sets of coordinates before determining the alphanumeric characters.

After in step 604, in sub-step 706, the click event is deleted.

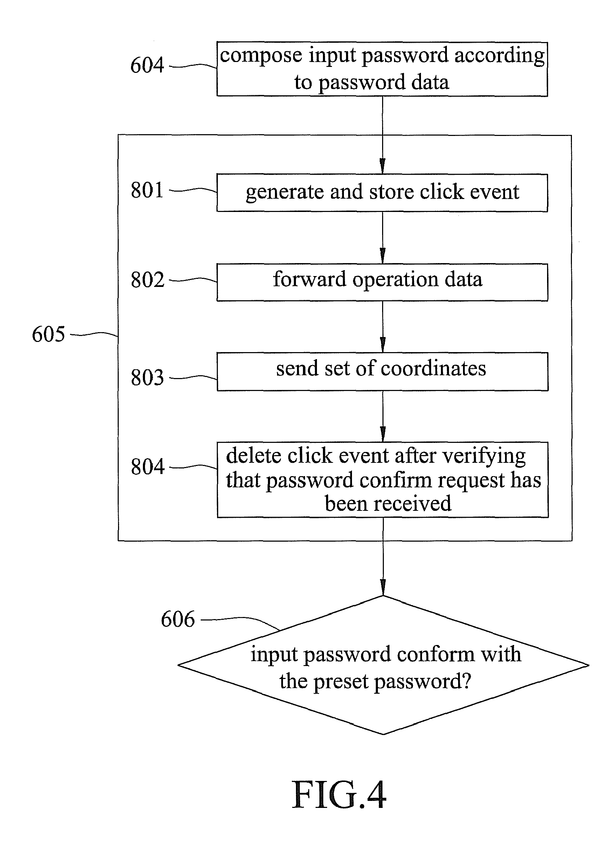

Referring to Figure 4, in this example, operations involved in step 605 are carried out in the following manner.

In sub-step 801, the password verifying device 3 generates and stores a click event therein.

In sub-step 802, the password verifying device 3 forwards the operation data to the control application program 12.

In sub-step 803, the control application program 12 obtains a set of coordinates for the click location on the virtual keyboard according to the operation data, and sends the set of coordinates to the password verifying device 3.

In sub-step 804, the password verifying device 3 determines that the password confirm request has been received only when the click location corresponds with the confirm button, and when the click event is stored in the password verifying device 3. After verifying that the password confirm request has been received, the password verifying device 3 is configured to delete the click event stored therein, and the flow proceeds to step 606. Otherwise, the flow is terminated.

To sum up, the computer system and the method of the disclosure provide a way to further enhance the password-protected features in the electronic device 1 by providing the password verifying device 3 and the input device 4 that are not controlled by the OS, and as a result, even though the OS may be hijacked and the preset password may be known to a third party, the password-protected features may still be inaccessible without physically having access to the password verifying device 3 and the input device 4.

## Claims

1. A method for verifying an input password to be implemented by a password verifying device (3) that is electrically connected between an input device (4) and an electronic device (4), the electronic device (4) including a computing module (112) that executes an operating system (OS) installed with a control application program (12), and a display module (5) that is electrically connected to the computing module (112), the password verifying device (3) being an independent, stand-alone device and storing a preset password, the method being **characterized by** the steps of:
a) in response to a password input request from the control application program (12), generating image data associated with a virtual keyboard and transmitting the image data to the computing module (112) so that the computing module (112) controls the display module (5) to display the virtual keyboard thereon;
b) in response to password data associated with an operation of the virtual keyboard from the control application program (12), composing an input password according to the password data; and
c) in response to a password confirm request from the input device (4), comparing the input password and the preset password.

2. The method of Claim 1, **characterized in that** the password data includes a sequence of click locations on the virtual keyboard, and step b) includes the sub-steps of:
b1) for each of the click locations, determining an alphanumeric character that is displayed on the virtual keyboard and that corresponds to the click location; and
b2) composing the input password by arranging the alphanumeric characters in an order of the sequence of the click locations.

3. The method of Claim 2, **characterized in that** the click locations are encoded into the password data by the control application program (12), and step b) further includes, before sub-step b1), the step of decoding the password data to fetch the click locations.

4. The method of one of Claims 2 and 3, **characterized in that** each of the click locations is indicated by a set of coordinates.

5. The method of any one of Claims 2 to 4, **characterized in that** step b) further includes the sub-steps of:
before sub-step b1), upon receiving operation data, which is associated with operation of the input device (4) on the virtual keyboard, from the input device (4), generating and storing a click event therein; and
forwarding the operation data to the control application program (12) so that the control application program (12) is operable to obtain a plurality of sets of coordinates respectively for the click locations on the virtual keyboard according to the operation data and to send the sets of coordinates to the password verifying device (3) as the password data;
wherein preferably, in sub-step b1), the password verifying device (3) determines the alphanumeric characters that are displayed on the virtual keyboard respectively at the click locations according to the sets of coordinates only when the click event is stored in the password verifying device (3);
wherein preferably step b) further includes the sub-step, after sub-step b2), of deleting the click event therefrom.

6. The method of Claim 5, **characterized in that** the sets of coordinates are encoded into the password data before being transmitted to the password verifying device (3), and the password verifying device (3) decodes the password data to fetch the sets of coordinates before determining the alphanumeric characters.

7. The method of any one of Claims 1 to 4, **characterized in that**, the virtual keyboard includes a confirm button, the password confirm request includes a click location on the virtual keyboard, and step c) includes the sub-steps of:
upon receiving operation data, which is associated with operation of the input device (4) on the virtual keyboard, from the input device (4), generating and storing a click event therein;
forwarding the operation data to the control application program (12) so that the control application program (12) is operable to obtain a set of coordinates for the click location on the virtual keyboard according to the operation data, and to send the set of coordinates to the password verifying device (3);
determining that the password confirm request has been received only when the click location according to the set of coordinates corresponds with the confirm button, and when the click event is stored in the password verifying device (3); and
deleting the click event stored therein.

8. A password verifying device (3) for verifying an input password, said password verifying device (3) being an independent, stand-alone device and electrically connected between an input device (4) and an electronic device (4), **characterized in that** said password verifying device (3) includes:
a virtual key generating unit (31) that, in response to a password input request from the electronic device (4), is configured to generate image data associated with a virtual keyboard and to transmit the image data to the electronic device (4);
a storage unit (33) that stores a preset password therein;
a processing unit (34) that, in response to password data associated with an operation of the virtual keyboard from the electronic device (4), is configured to compose an input password according to the password data, and
a comparing unit (32) that, in response to a password confirm request from the input device (4), is configured to compare the input password and the preset password.

9. The password verifying device (3) of Claim 8, the password data including a sequence of click locations on the virtual keyboard, **characterized in that**:
for each of the click locations, said processing unit (34) is configured to determine an alphanumeric character that is displayed on the virtual keyboard and that corresponds to the click location; and
said processing unit (34) is configured to compose the input password by arranging the alphanumeric characters in an order of the sequence of the click locations.

10. The password verifying device (3) of Claim 9, **characterized in that** the click locations are encoded into the password data by the electronic device (4), and said processing unit (34) is configured to decoding the password data to fetch the click locations.

11. The password verifying device (3) of one of Claims 9 and 10, **characterized in that**:
upon receiving operation data, which is associated with operation of the input device (4) on the virtual keyboard, from the input device (4), said processing unit (34) is configured to generate a click event and store the click event in said storage unit (33);
said processing unit (34) is further configured to forward the operation data to the electronic device (4) so that the electronic device (4) is operable to obtain a plurality of sets of coordinates respectively for the click locations on the virtual keyboard according to the operation data, and to send the sets of coordinates to said password verifying device (3) as the password data;
said processing unit (34) determines the alphanumeric characters that are displayed on the virtual keyboard respectively at the click locations according to the sets of coordinates only when the click event is stored in said storage unit (33); and
after composing the input password, said processing unit (34) is configured to delete the click event.

12. The password verifying device (3) of any one of Claims 8 to 11, the virtual keyboard including a confirm button, the password confirm request including a click location on the virtual keyboard, **characterized in that**:
upon receiving operation data, which is associated with operation of the input device (4) on the virtual keyboard, from the input device (4), said processing unit (34) is configured to generate a click event and store the click event in said storage unit (33);
said processing unit (34) is further configured to forward the operation data to the electronic device (4) so that the electronic device (4) is operable to obtain a set of coordinates for the click location on the virtual keyboard according to the operation data, and to send the sets of coordinates to the password verifying device (3);
said processing unit (34) is configured to verify that the password confirm request has been received only when the click location according to the set of coordinates corresponds with the confirm button, and when the click event is stored in said storage unit (33) ; and
after verifying that the password confirm request has been received, said processing unit (34) is configured to delete the click event stored therein.

13. A computer system including:
an electronic device (4) including
a computing module (112) executing an operating system (OS) that is installed with a control application program (12), and
a display module (5) electrically connected to said computing module (112);
an input device (4); and
a password verifying device (3) of Claim 8.

14. The computer system of Claim 13, **characterized in that**:
upon receiving operation data, which is associated with operation of said input device (4) on the virtual keyboard, from said input device (4), said password verifying device (3) is configured to generate and store a click event therein before forwarding the operation data to said computing module (112);
said computing module (112) is configured to obtain a plurality of sets of coordinates respectively for the click locations on the virtual keyboard according to the operation data, and to send the sets of coordinates to said password verifying device (3) as the password data.

15. The computer system of Claim 13, **characterized in that**:
the virtual keyboard displayed by said display module (5) includes a confirm button, and the password confirm request includes a click location on the virtual keyboard;
upon receiving operation data, which is associated with operation of said input device (4) on the virtual keyboard, from said input device (4), said password verifying device (3) is configured to generate and store a click event therein before forwarding the operation data to said computing module (112); and
said computing module (112) is operable to obtain a set of coordinates for the click location on the virtual keyboard according to the operation data, and to send the set of coordinates to said password verifying device (3).
